# EUROPEAN PATENT APPLICATION

(11) **EP 3 693 117 A1**
(43) Date of publication of application: **12.08.2020**
(21) Application number: 20155892.1
(22) Date of filing: 06.02.2020
(51) Int. Cl.: B23K 9/067, B23K 9/073, B23K 9/09, B23K 9/167, B23K 10/00

(54) **TIG WELDING ARC INITIATION**

(30) Priority: 06.02.2019 US 201962801825 P; 06.01.2020 US 202016734466
(71) Applicant: Lincoln Global, Inc., Santa Fe Springs, CA 90670 (US)
(72) Inventor: Lytle, Timothy A., Eastlake, OH 44095 (US); McCall, Gregory M., Eastlake, OH 44095 (US); Crescenze, Samuel P., Westerville, OH 43081 (US)
(74) Representative: Grosse Schumacher Knauer von Hirschhausen

(57) **Abstract**

A gas tungsten arc welding system (100) includes a welding power source (110) including a controller (152) comprising a memory storing a plurality of parameters that at least partially define a welding waveform. The welding waveform includes a high frequency stage (400), an AC arc initiation stage (402) following the high frequency stage (400) wherein the AC arc initiation stage (402) comprises a plurality of AC current pulses that decrease in amplitude during a slope duration, and an AC sequencing stage (404) following the AC arc initiation stage (402). The system (100) further includes a user input (116) in communication with the controller (152) and configured to receive a manual activation of an increased energy AC arc initiation mode. The controller (152) is configured to increase energy of the AC arc initiation stage (402), when the increased energy AC arc initiation mode is activated, by at least lengthening the slope duration of the AC arc initiation stage (402).

## Description

The present application claims priority to U.S. Provisional Patent Application Serial Number 62/801,825 filed February 6, 2019, the disclosure of which is incorporated herein by reference.

### FIELD OF THE INVENTION

The invention is related to a gas tungsten arc welding system according to claim 1, according to claim 7 and according to claim 10. Embodiments of the present invention relate to the generation of electrical arcs in a welding or additive manufacturing system, and in particular to arc initiation in an AC gas tungsten arc welding (GTAW or TIG) process.

### TECHNICAL BACKGROUND

TIG welding involves the provision of AC or DC welding current to a welding circuit in which a non-consumable tungsten-based (e.g., tungsten or tungsten alloy) electrode is spaced from a workpiece to define a gap. An arc is created in the gap to melt the workpiece and any filler rod or wire moved into the arc. In TIG welding operations, a shield of inert gas, typically argon, protects the weld puddle, electrode, and the filler rod/wire from the ambient atmosphere, in order to prevent rapid oxidation of the weld and surrounding metal. TIG welder power supplies may be AC, DC, or combinations thereof, as determined according to the type of metal to be welded. DC welding is often used to weld stainless steel and mild and low alloy steels, whereas AC is typically used to weld aluminum. In AC welding, surface oxidation is removed in the half power cycle where the electrode is positive, and hence this is referred to as the "cleaning" half-cycle, while the negative half-cycle is referred to as the "penetration" half-cycle. The welding voltages and currents provided during the penetration and cleaning half-cycles are typically not equally balanced. For example, more energy may be applied by the welder during penetration than in cleaning. TIG welders, both DC and AC types, commonly employ an arc starting sequence prior to generating a welding waveform. It can be challenging to establish the arc in a consistent manner from one welding operation to another, due to differences in workpiece and electrode composition for example. An arc starting sequence may be suitable for some welding conditions, but not others.

### DESCRIPTION

In order to optimize TIG welding, especially with respect to the starting sequence, a gas tungsten arc welding system according to claim 1, according to claim 7 and according to claim 10 are described. Preferred embodiments are subject of the sub claims. The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a gas tungsten arc welding system. The system includes a welding power source including a controller comprising a memory storing a plurality of parameters that at least partially define a welding waveform. The welding waveform includes a high frequency stage, an AC arc initiation stage following the high frequency stage wherein the AC arc initiation stage comprises a plurality of AC current pulses that decrease in amplitude during a slope duration, and an AC sequencing stage following the AC arc initiation stage. The system further includes a user input in communication with the controller and configured to receive a manual activation of an increased energy AC arc initiation mode. The controller is configured to increase energy of the AC arc initiation stage, when the increased energy AC arc initiation mode is activated, by at least lengthening the slope duration of the AC arc initiation stage.

In accordance with another aspect of the present invention, provided is a gas tungsten arc welding system. The system includes a welding power source including a controller comprising a memory storing a plurality of parameters that at least partially define a welding waveform. The welding waveform includes a high frequency stage, an AC arc initiation stage following the high frequency stage wherein the AC arc initiation stage comprises a plurality of AC current pulses that decrease in amplitude during a slope duration, and an AC sequencing stage following the AC arc initiation stage. The slope duration begins upon starting the AC arc initiation stage and ends upon starting the AC sequencing stage. A user interface is in communication with the controller. The user interface is configured to receive a manual activation of an increased energy AC arc initiation mode. The controller is configured to increase energy of the AC arc initiation stage, when the increased energy AC arc initiation mode is activated, by at least lengthening the slope duration, increasing pulse magnitudes of the plurality of AC current pulses, and increasing strike times of the plurality of AC current pulses. The slope duration, pulse magnitudes, and strike times of the increased energy AC arc initiation mode are manually adjustable through the user interface.

In accordance with another aspect of the present invention, provided is a gas tungsten arc welding system. The system includes a welding power source including a controller comprising a memory storing a plurality of parameters that at least partially define a welding waveform. The welding waveform includes a high frequency stage, an AC arc initiation stage following the high frequency stage wherein the AC arc initiation stage comprises a plurality of AC current pulses that decrease in amplitude during a slope duration, and an AC sequencing stage following the AC arc initiation stage. The slope duration begins upon starting the AC arc initiation stage and ends upon starting the AC sequencing stage. A user interface is in communication with the controller. The user interface is configured to receive a manual activation of an increased energy AC arc initiation mode. The controller is configured to increase energy of the AC arc initiation stage, when the increased energy AC arc initiation mode is activated, by at least lengthening the slope duration of the AC arc initiation stage from a default slope duration that controls a time duration of the AC arc initiation stage when the increased energy AC arc initiation mode is deactivated.

### BRIEF DESCRIPTION OF THE DRAWINGS

FIG. 1 is a perspective view of an example welding system;
FIG. 2 shows a schematic diagram of an example welding power source;
FIG. 3 shows example welding electrode tips;
FIG. 4 shows a portion of an example welding waveform; and
FIG. 5 shows an example controller.

### DETAILED DESCRIPTION

The present invention relates to arc initiation in a TIG welding (i.e., GTAW) process. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

Embodiments of the present invention are described herein in the context of a welding system, in particular a TIG welding system. In addition to welding operations, embodiments of the present invention can be used in additive manufacturing processes and other welding-type processes, such as hardfacing. Thus, the term "welding" is to be interpreted to include such welding-type processes.

To establish a welding arc, conventional TIG welding machines can generate welding waveforms that have an initial a high frequency stage, followed by an arc starting sequence or arc initiation stage. The high frequency stage is brief, such as 100 ms, and during the high frequency stage, the welding power source outputs a high-frequency, high-voltage, low-current waveform. The welding waveform during the high frequency stage can be in the range 1-10 Mhz for example, and have a voltage level of several thousand volts peak-to-peak.

The arc initiation stage follows the high frequency stage. The arc initiation stage can be a series of current pulses that are designed to establish an arc between the tungsten electrode and the workpiece. The arc initiation stage is also brief, for example 100 - 500 ms, and is followed by a sequencing stage. Once the arc is successfully initiated, the welding waveform enters the sequencing stage, which makes up the major portion of the welding waveform. Example welding waveforms include DC and AC currents (e.g., a square wave AC current). A programmed arc starting sequence may work well for some combinations of workpieces and electrodes, but not for others. Thus, the arc initiation stage of the welding waveform may not provide for a sufficiently consistent arc start from one welding operation to another. For example, it can be difficult to initiate an arc when the workpieces are oxidized aluminum (e.g., cast aluminum, anodized aluminum, etc.) The composition of the tungsten electrode can also affect arc starting. Alloyed tungsten electrodes typically possess more free electrons than non-alloyed tungsten electrodes. Alloyed tungsten electrodes have better electron emission characteristics and, thus, can establish an arc more easily. The shape of the tip of the electrode can also affect arc starting. When welding with a square wave AC current, an arc can be established more easily when the tip of the tungsten electrode is pointed or truncated. Initiating an arc is more difficult when the tip of the electrode is balled. Conventional TIG welding machines have a programmed starting sequence that is employed regardless of workpiece and electrode composition and electrode tip sharpness. The TIG welding machine discussed below includes both a default arc initiation mode and an increased energy arc initiation mode, or "boost mode" starting sequence, that is stronger or more robust (e.g., outputs more energy) than the default arc initiation mode. The default arc initiation mode may be suitable for most welding operations. However, the increased energy arc initiation mode can be manually activated by an operator when desired, or automatically implemented by the welding power supply when deemed necessary.

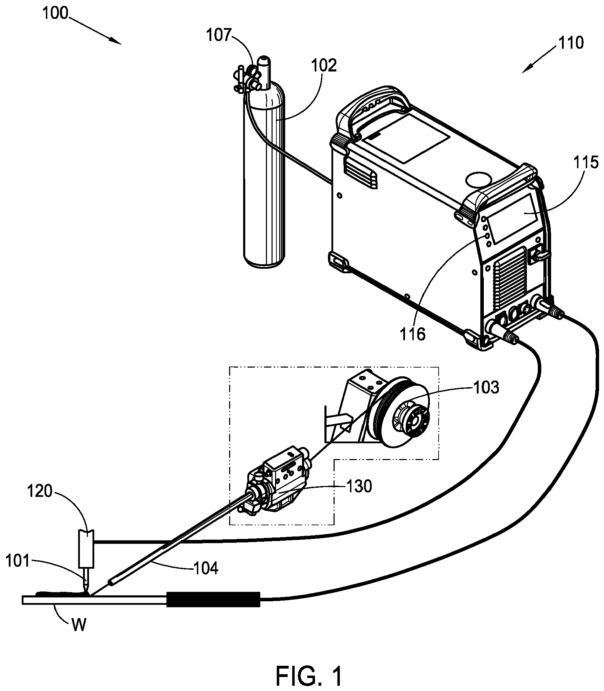

Figure 1 illustrates an example TIG welding system 100. The welding system 100 includes a welding power source 110 that generates welding waveforms under the control of an electronic controller (e.g., a programmable microprocessor, microcontroller, etc.) The welding system 100 includes a torch 120 having a tungsten-based electrode 101 for generating an arc between the electrode and a workpiece W. A consumable rod or wire can be used to deposit weld filler material into a weld joint.

The welding torch 120 is connected to a supply of shielding gas 102, such as argon gas, to shield the arc and weld puddle. The supply of shielding gas is controlled by a regulator 107 or other controller. The welding system 100 can include a wire feeder 130 for supplying filler wire from a wire source (e.g., a spool 103). The filler wire can be fed to the arc through appropriate wire guides 104. Filler rod can also be fed manually to the arc/weld puddle by the operator during the deposition operation.

The welding power source 110 includes a user interface 115 that allows an operator or user to view and adjust the settings of various welding parameters. Example parameters that can be set/adjusted via the user interface include: welding mode (e.g., DC TIG, AC TIG, polarity), pulse frequency, AC balance (e.g, % electrode negative), AC frequency, etc. The user interface 115 can also provide an increased energy AC arc initiation mode (e.g., "boost mode") selection that allows a user to activate a robust, increased energy AC arc starting sequence. The boost mode starting sequence outputs more energy to the welding circuit than the default base starting sequence, to better heat the electrode and workpiece and establish the arc before active welding begins. When activated, the boost mode starting sequence temporarily replaces the default AC arc initiation stage in the welding waveform that is output by the welding power source 110. In certain embodiments, the user can adjust individual parameters of the starting sequence via the user interface 115, such as the current level, pulse widths, and duration of the starting sequence, to implement the boost mode starting sequence. In other embodiments, the user can merely activate or deactivate the boost mode starting sequence, such as via a single user input 116 (e.g., an activation/deactivation button), and the user has no manual control over the predefined parameters of the default base AC arc initiation stage or the boost mode starting sequence parameters. The user interface 115 can provide a textual or pictographic identification of the boost mode selection or activation input. Example identifications of the boost mode input can inform the user of what the input does (e.g., activate "boost mode", "hot start", "warm start", "robust start", etc.) or when the boost mode should be used (e.g., "ball", "non-alloy", "oxidized", etc.) When the increased energy AC arc initiation mode or boost mode has been activated or deactivated, the user interface can display, or otherwise provide, a corresponding indication to that effect.

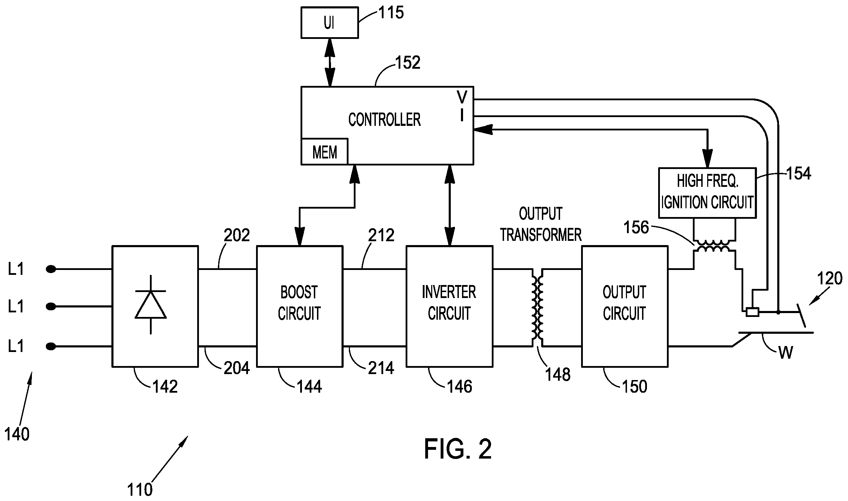

Figure 2 shows a schematic diagram of the welding power source 110. The welding power source 110 generates an electric arc between a torch 120 and a workpiece W to perform an arc welding operation. The welding power source 110 receives electrical energy for generating the arc from another power source 140, such as a commercial power source or a generator. The power source 140 can be a single phase or three phase power source. In certain embodiments, the arc welding system can be a hybrid system that includes one or more batteries (not shown) that also supply energy to the welding power source 110. AC power from the power source 140 is rectified by an input rectifier 142. The rectifier 142 receives single or three phase line AC voltage and rectifies it to a DC voltage, which is output on lines 202 and 204. Typically, the input line AC voltage can range from 100 volts to 575 volts at 50 Hz or 60 Hz depending on geographical location. After being rectified, the DC voltage on bus 202/204 is received by a boost circuit 144, which boosts the input DC voltage to a desired value, e.g., 400 volts. The boost circuit 144 regulates the voltage on bus 212/214 at the desired value even if there are fluctuations in the input AC voltage. Of course, depending on the input AC line voltage and the desired DC voltage on bus 212/214, circuit 144 can be a buck circuit or a buck/boost circuit rather than just a boost circuit. In addition, the circuit 144 can be configured to provide power factor correction if desired. The regulated DC voltage on bus 212/214 is then converted to high frequency AC by inverter 146. The AC from the inverter 146 is converted to a voltage appropriate for welding by transformer 148 and output circuit 150. The output circuit 150 outputs the appropriate AC or DC welding waveform for the selected welding mode. An example output circuit 150 is a bridge circuit (e.g., an H-bridge) that controls the polarity of the welding waveform.

The welding power source 110 can include a high frequency ignition circuit 154 and, in certain embodiments, an ignition transformer 156, that are operatively connected to the output of the output circuit 150. During the high frequency stage of the welding waveform, the high frequency ignition circuit 154 generates a high frequency signal that is superimposed onto welding circuit. The secondary of ignition transformer 156 can be connected in series between one terminal of output circuit 150 and the welding electrode. The ignition circuit 154 is also operatively connected to controller 152. The controller controls the operations of the high frequency ignition circuit 154 to briefly output a high frequency signal at the start of a welding operation.

The controller 152 can also be operatively connected to the boost circuit 144 and the inverter 146 to control the welding waveforms generated by the welding power source 110. The controller 152 controls the output of the inverter 146 via the waveform control signal, to achieve a desired welding waveform, welding voltage, welding current, etc. The waveform control signal can comprise a plurality of separate control signals for controlling the operation of various switches (e.g., transistor switches) within the inverter 146. The controller 152 can adjust various welding waveform parameters such as welding voltage, current level, current pulse widths and peaks, duration of the high frequency and arc initiation stages of the welding waveform, etc. The controller 152 and the user interface 115 communicate bidirectionally to provide both user inputs and outputs at the user interface. The controller 152 monitors aspects of the welding process via feedback signals. For example, a current sensor, such as a current transformer (CT) or shunt, can provide a welding current feedback signal to the controller 152, and a voltage sensor can provide a welding voltage feedback signal to the controller.

The controller 152 can be an electronic controller and may include a processor. The controller 152 can include one or more of a microprocessor, a microcontroller, a digital signal processor (DSP), an application specific integrated circuit (ASIC), a field-programmable gate array (FPGA), discrete logic circuitry, or the like. The controller 152 can include a memory portion (e.g., RAM or ROM) storing program instructions that cause the controller to provide the functionality ascribed to it herein. The controller 152 can include a plurality of physically separate circuits or electronic devices, such as a processor in combination with separate comparators, logic circuits, etc. However, for ease of explanation, the controller 152 is shown as a monolithic device.

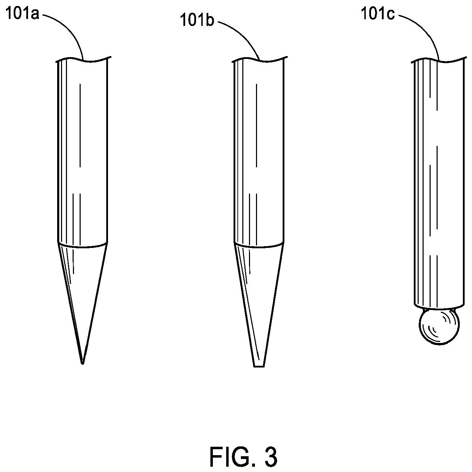

Figure 3 shows example tip shapes for the tungsten-based electrodes in the welding torch. Any of the tip shapes 101a, 101b, 101c can be used in a welding operation, according to the preferences of the user. However, in square wave AC welding, an arc is more easily established using a pointed tip 101a or a truncated tip 101b, than using a balled tip 101c. The balled tip 101c has greater surface area than the pointed or truncated tips and requires more energy input to initially heat the tip, in order to establish the welding arc.

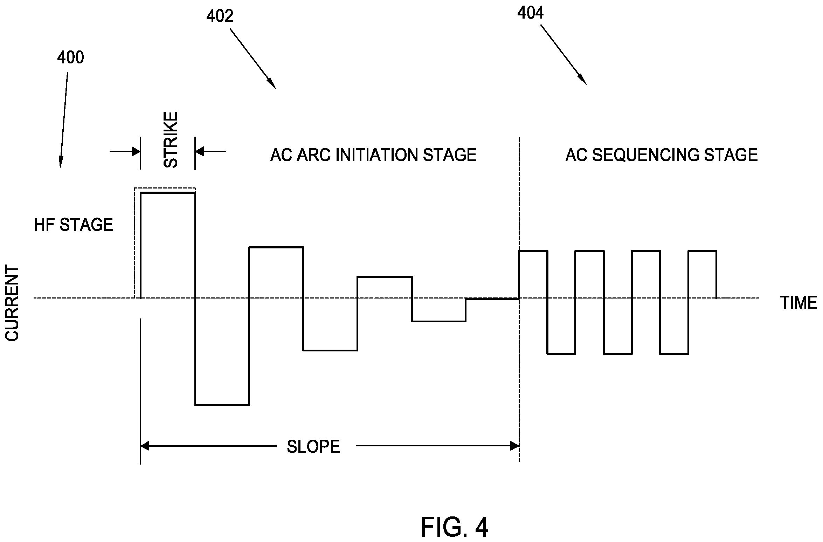

Figure 4 shows a portion of an example square wave AC welding waveform that is generated by the welding power source 110. The welding waveform includes an initial high frequency stage 400, followed by an AC arc initiation stage 402, followed by an AC sequencing stage 404. Together, the high frequency stage 400 and the AC arc initiation stage 402 might last for less than 1 second, such as several hundred milliseconds. The high frequency stage 400 and the AC arc initiation stage 402 are executed automatically by the controller when a welding operation is initiated. The AC sequencing stage 404 makes up the major portion of the welding waveform and, subsequent to the AC arc initiation stage 402, lasts for the remaining duration of the deposition operation. The AC arc initiation stage 402 and the AC sequencing stage 404 are shown as square waves. However, the welding waveform could have other shapes during the arc initiation and sequencing stages, such as a more sinusoidal shape for example. The sequencing stage could also be a DC current if desired. The AC arc initiation stage 402 and the AC sequencing stage 404 include a series of current pulses. The magnitude of the current pulses in the AC arc initiation stage 402, and other parameters associated with the AC arc initiation stage, are preset within the welding power source. During manual welding, the magnitude of the current pulses in the AC sequencing stage 404 are controlled within an allowable range by the user via a foot pedal or other input device that is operatively connected to the welding power source, whereas other parameters of the sequencing stage, such as pulse frequency and AC balance, are preset within the power source. The magnitudes of some of the pulses in the AC arc initiation stage 402 can be greater than the magnitudes of some or all of the pulses in the AC sequencing stage 404. The AC arc initiation stage 402 would typically have higher initial current pulses than those used during the AC sequencing stage 404, to preheat the tungsten electrode and help establish an arc. The pulse widths of the welding waveform during the AC sequencing stage 404 can be different from the pulse widths of the AC arc initiation stage 402, or the pulse widths can be the same. Prior to the AC sequencing stage 404 and during the AC arc initiation stage 402, the power to the tungsten electrode is typically ramped down to a low current level. As can be seen in Fig. 4., the AC arc initiation stage 402 can comprise a plurality of AC current pulses that decrease in amplitude or are ramped down over the duration of the arc initiation stage. Ramping the current down during the AC arc initiation stage 402 can help to protect the workpiece from damage due to the higher energy level initially used to establish the arc during the arc initiation stage 402.

If the AC arc initiation stage 402 shown in Fig. 4 is considered to be a default base starting sequence, it can be suitable for establishing an arc under commonly-encountered welding conditions (e.g., using a pointed and/or alloyed tungsten electrode and/or welding a lightly oxidized aluminum workpiece). The parameters that define the default AC arc initiation stage can be stored in the memory of the controller. Such parameters can include the duration of the arc initiation stage, the magnitudes of the pulses and their pulse widths/frequency, and the AC balance. The default parameters are used by the controller to control the AC arc initiation stage 402 when the boost mode is deactivated. However, a stronger starting sequence that puts more energy into the electrode and workpiece may be desired under certain welding conditions, such as when welding highly oxidized aluminum, and/or when welding with a non-alloyed and/or balled tungsten electrode, to help ensure that an arc is established. The welding power supply includes an increased energy AC arc initiation mode or "boost mode" that utilizes an increased energy AC arc initiation stage when the boost mode is activated. During the boost mode, the controller adjusts one or more of the parameters of the default AC arc initiation stage to increase the energy delivered to the electrode during arc initiation. Example parameters that can be adjusted by the controller to increase the energy of the starting sequence include the current level or pulse magnitudes of the AC current pulses, strike times, and slope duration of the AC arc initiation stage 402. The current level or magnitude of the pulse peaks of the current pulses can be greater in the boost mode than in the default AC arc initiation stage, as shown in dotted line in Fig. 4. The slope duration is the time it takes to ramp from the start current level to a low current level at the start of the AC sequencing stage 404. The slope duration begins upon starting the AC arc initiation stage 402 and ends upon starting the AC sequencing stage 404. The slope duration can be lengthened in the boost mode to increase the energy of the starting sequence. The strike time is the pulse width of the current pulses in the starting sequence, and the strike time can be lengthened in the boost mode, as shown in dotted line in Fig. 4. Lengthening the strike time will also lengthen the slope duration. Any one or more of the pulse magnitudes, strike time/pulse width, and slope duration of the default AC arc initiation stage can be adjusted when the increased energy AC arc initiation mode is activated, to increase the energy of the AC arc initiation stage. The controller can adjust these example parameters of the AC arc initiation stage, and other parameters if desired, individually or simultaneously when operating in the increased energy AC arc initiation mode. In certain embodiments, the increased energy AC arc initiation mode can have an adjustable AC balance to adjust the ratio of the positive and negative strike times. The parameters that define the increased energy AC arc initiation mode can be stored in the memory of the controller.

In certain embodiments, the user can manually activate the increased energy AC arc initiation mode (e.g., via the user interface on the welding power source) when it is known that arc initiation could be difficult. The user could also adjust the individual parameters of the increased energy AC arc initiation mode, to set a desired starting current level, strike time and/or slope duration for arc initiation stage. Once activated, the increased energy AC arc initiation mode can remain activated until manually deactivated by the user. Alternatively, the increased energy AC arc initiation mode can be active for a single welding operation or for a predetermined period of time (e.g., 30 minutes). The user interface of the welding power source can provide an indication that the increased energy AC arc initiation mode is activated or deactivated.

In certain embodiments, the increased energy AC arc initiation mode can be automatically activated by the welding power supply, based on a detected electrode composition or sensed condition of the electrode tip. Balling of the electrode tip could be sensed by a camera and imaging system. The camera could be located at the torch or nearby the torch, such as on a user's welding helmet. The imaging system could be incorporated into the welding power supply, which is operatively coupled to the camera.

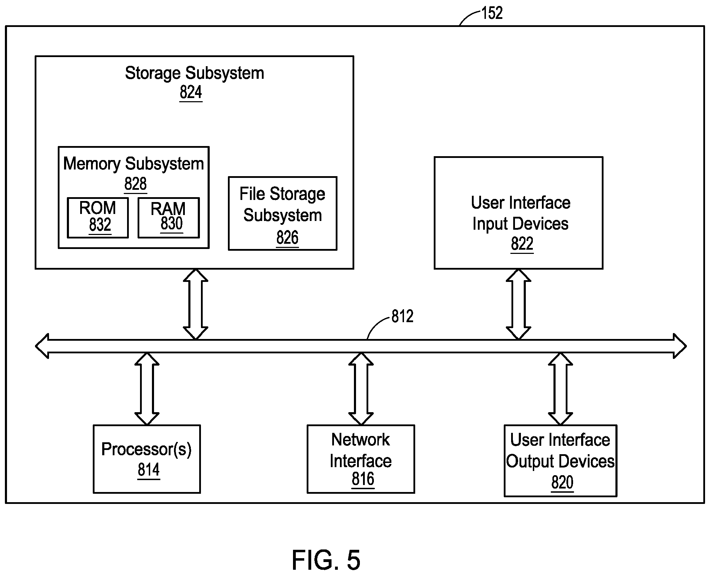

Figure 5 illustrates an embodiment of an example controller 152 of the welding power supply. The controller 152 includes at least one processor 814 which communicates with a number of peripheral devices via bus subsystem 812. These peripheral devices may include a storage subsystem 824, including, for example, a memory subsystem 828 and a file storage subsystem 826, user interface input devices 822, user interface output devices 820, and a network interface subsystem 816. The input and output devices allow user interaction with the controller 152. The input and output devices can be embodied in the user interface 115 discussed above. Network interface subsystem 816 provides an interface to outside networks and is coupled to corresponding interface devices in other computer systems.

User interface input devices 822 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 152 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 152 to the user or to another machine or computer system.

Storage subsystem 824 provides a non-transitory, computer-readable storage medium that stores programming and data constructs that provide the functionality of some or all of the modules described herein. These software modules are generally executed by processor 814 alone or in combination with other processors. Memory 828 used in the storage subsystem can include a number of memories including a main random access memory (RAM) 830 for storage of instructions and data during program execution and a read only memory (ROM) 832 in which fixed instructions are stored. A file storage subsystem 826 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 826 in the storage subsystem 824, or in other machines accessible by the processor(s) 814.

Bus subsystem 812 provides a mechanism for letting the various components and subsystems of the controller 152 communicate with each other as intended. Although bus subsystem 812 is shown schematically as a single bus, alternative embodiments of the bus subsystem may use multiple buses.

Many other configurations of the controller 152 are possible having more or fewer components than the controller depicted in FIG. 5.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

**REFERENCE NUMERALS**

| | | | |
|---|---|---|---|
| 100 | welding system | 156 | ignition transformer |
| 101 | electrode | 202 | line |
| 101a | tip shape | 204 | line |
| 101b | tip shape | 212 | bus |
| 101c | tip shape | 214 | bus |
| 103 | spool | 400 | high fequency stage |
| 104 | wire guide | 402 | initiation stage |
| 107 | regulator | 404 | sequencing stage |
| 110 | welding power source | 812 | bus subsystem |
| 115 | user interface | 814 | processor |
| 116 | user input | 816 | interface subsystem |
| 120 | welding torch | 820 | output device |
| 130 | wire feeder | 822 | input device |
| 140 | power source | 824 | storage subsystem |
| 142 | input rectifier | 826 | storage subsystem |
| 144 | boost circuit | 828 | memory subsystem |
| 146 | inverter | 830 | random access memory (RAM) |
| 150 | output circuit | 832 | random only memory (ROM) |
| 152 | controller | W | workpiece |
| 154 | ignition circuit | | |

## Claims

1. A gas tungsten arc welding system (100), comprising:
a welding power source (110) including a controller (152) comprising a memory storing a plurality of parameters that at least partially define a welding waveform, wherein the welding waveform includes:
a high frequency stage (400);
an AC arc initiation stage (402) following the high frequency stage (400), wherein the AC arc initiation stage comprises a plurality of AC current pulses that decrease in amplitude during a slope duration; and
an AC sequencing stage (404) following the AC arc initiation stage (402); and
a user input in communication with the controller (152) and configured to receive a manual activation of an increased energy AC arc initiation mode,
wherein the controller (152) is configured to increase energy of the AC arc initiation stage (402), when the increased energy AC arc initiation mode is activated, by at least lengthening the slope duration of the AC arc initiation stage (402).

2. The gas tungsten arc welding system (100) of claim 1, wherein the slope duration begins upon starting the AC arc initiation stage (420) and ends upon starting the AC sequencing stage.

3. The gas tungsten arc welding system (100) of claim 1 or 2, further comprising a user interface (115) that provides said user input and provides a corresponding indication when the increased energy AC arc initiation mode is activated.

4. The gas tungsten arc welding system (100) of any of the claims 1 o 3, wherein the increased energy AC arc initiation mode remains activated until manually deactivated.

5. The gas tungsten arc welding system (100) of any of the claims 1 to 4, further comprising a user interface (115) that provides said user input (116), wherein the slope duration of the increased energy AC arc initiation mode is manually adjustable through the user interface (115).

6. The gas tungsten arc welding system (100) of any of the claims 1 to 5, wherein the memory stores a default slope duration for the AC arc initiation stage (402) that controls a time duration of the AC arc initiation stage (402) when the increased energy AC arc initiation mode is deactivated.

7. A gas tungsten arc welding system (100), comprising:
a welding power source (110) including a controller (152) comprising a memory storing a plurality of parameters that at least partially define a welding waveform, wherein the welding waveform includes:
a high frequency stage (400);
an AC arc initiation stage (402) following the high frequency stage (400), wherein the AC arc initiation stage comprises a plurality of AC current pulses that decrease in amplitude during a slope duration; and
an AC sequencing stage (404) following the AC arc initiation stage (402),
wherein the slope duration begins upon starting the AC arc initiation stage (402) and ends upon starting the AC sequencing stage (404); and
a user interface (115) in communication with the controller (115), wherein the user interface (115) is configured to receive a manual activation of an increased energy AC arc initiation mode,
wherein the controller (152) is configured to increase energy of the AC arc initiation stage (402), when the increased energy AC arc initiation mode is activated, by at least lengthening the slope duration, increasing pulse magnitudes of the plurality of AC current pulses, and increasing strike times of the plurality of AC current pulses, and
wherein the slope duration, pulse magnitudes, and strike times of the increased energy AC arc initiation mode are manually adjustable through the user interface (115).

8. The gas tungsten arc welding system (110) of claim 7, wherein the memory stores a default slope duration, default pulse magnitudes, and default strike times for controlling the AC arc initiation stage (402) when the increased energy AC arc initiation mode is deactivated.

9. A gas tungsten arc welding system (100), comprising:
a welding power source (110) including a controller (152) comprising a memory storing a plurality of parameters that at least partially define a welding waveform, wherein the welding waveform includes:
a high frequency stage (400);
an AC arc initiation stage (402) following the high frequency stage (400), wherein the AC arc initiation stage (402) comprises a plurality of AC current pulses that decrease in amplitude during a slope duration; and
an AC sequencing stage (404) following the AC arc initiation stage (402),
wherein the slope duration begins upon starting the AC arc initiation stage and ends upon starting the AC sequencing stage (402); and
a user interface (115) in communication with the controller (152), wherein the user interface (115) is configured to receive a manual activation of an increased energy AC arc initiation mode,
wherein the controller (152) is configured to increase energy of the AC arc initiation stage (402), when the increased energy AC arc initiation mode is activated, by at least lengthening the slope duration of the AC arc initiation stage (402) from a default slope duration that controls a time duration of the AC arc initiation stage (402) when the increased energy AC arc initiation mode is deactivated.

10. The gas tungsten arc welding system (100) of claim 9, wherein the slope duration of the increased energy AC arc initiation mode is manually adjustable through the user interface (115).

11. The gas tungsten arc welding system (100) any of the claims 1 to 10, wherein the controller (152) is further configured to increase energy of the AC arc initiation stage (402), when the increased energy AC arc initiation mode is activated, by increasing pulse magnitudes of the plurality of AC current pulses.

12. The gas tungsten arc welding system (100) of any of the claims 1 to 11, wherein the controller (152) is further configured to increase energy of the AC arc initiation stage, when the increased energy AC arc initiation mode is activated, by increasing strike times of the plurality of AC current pulses.

13. The gas tungsten arc welding system (100) of any of the claims 9 to 12, wherein, when the increased energy AC arc initiation mode is activated, the user interface (115) provides a corresponding indication.

14. The gas tungsten arc welding system (100) of any of the claimes 1 to 13, wherein the increased energy AC arc initiation mode remains activated until manually deactivated.

15. The gas tungsten arc welding system (100) of any of the claimes 1 to 14, wherein the controller (152) is configured to simultaneously adjust the slope duration, pulse magnitudes of the plurality of AC current pulses, and strike times of the plurality of AC current pulses for the AC arc initiation stage (402), based on a single user input activating the increased energy AC arc initiation mode.
